# EUROPÄISCHE PATENTSCHRIFT

(11) **EP 4 180 372 B1**
(45) Veröffentlichungstag und Bekanntmachung des Hinweises auf die Patenterteilung: **20.03.2024**
(21) Anmeldenummer: 21207564.2
(22) Anmeldetag: 10.11.2021
(51) Int. Cl.: B65G 57/03

(54) **WERKSTÜCKTRÄGEREINRICHTUNG ZUM DARIN ANORDNEN UND STAPELN VON FLÄCHENHAFTEN BAUTEILEN ENTLANG EINER STAPELRICHTUNG**
WORKPIECE CARRIER DEVICE FOR ARRANGING AND STACKING FLAT COMPONENTS THEREIN ALONG A STACKING DIRECTION
DISPOSITIF DE SUPPORT DE PIECES POUR DISPOSER ET EMPILER DES COMPOSANTS PLATS LE LONG D'UNE DIRECTION D'EMPILAGE

(43) Veröffentlichungstag der Anmeldung: 17.05.2023
(73) Patentinhaber: VAF GmbH, 73441 Bopfingen (DE)
(72) Erfinder: Fischer, Matthias, 73495 Stödtlen (DE)
(74) Vertreter: Schorr, Peter Karl

(56) Entgegenhaltungen:
- EP-A1- 3 862 282
- DE-A1-102006 049 414

## Beschreibung

Die Erfindung betrifft eine Werkstückträgereinrichtung zum darin Anordnen und Stapeln von flächenhaften Bauteilen entlang einer Stapelrichtung, mit mindestens einer Grundplatte, mit mindestens zwei einander gegenüberliegenden und an der Grundplatte festgelegten Stützwänden, mit mindestens zwei Seitenplatten, die an den Stützwänden festgelegt und zur Grundplatte beanstandet sind und die mit den Stützwänden und der Grundplatte einen zumindest in Stapelrichtung zugänglichen Freiraum umgeben, mit mindestens einer Aufnahmeeinheit, die eine Auflageplatte und die einen Antrieb umfasst, durch den die Auflageplatte von einer Ruheposition, in der die Auflageplatte an der Grundplatte anliegt, in eine Start-Aufnahmeposition, in der unmittelbar an der Auflageplatte ein Bauteil anordenbar ist und in der ein Abstand von Auflageplatte und Grundplatte maximal ist, und stellschrittweise in eine Mehrzahl von Zwischen-Aufnahmepositionen bis zum Erreichen einer End-Aufnahmeposition überführbar ist, in der eine vorgebbare Anzahl von Bauteilen auf der Auflageplatte gestapelt sind, wobei ein Stellschritt die Erstreckung des jeweils abgelegten Bauteils in Stapelrichtung umfasst und ein Ablageort zum Ablegen eines neuen Bauteil ortsfest durch die Auflageplatte in der Start-Aufnahmeposition oder in den Zwischen-Aufnahmepositionen und der End-Aufnahmeposition durch die der Auflageplatte abgewandte freie Oberfläche des Bauteils gebildet ist, die zur Auflageplatte den größten Abstand umfasst.

Für die Produktion und Montage von Batterien, Brennstoffzellen oder Elektrolyseuren müssen einzelne Bauteile übereinander zu Bauteilpaaren gestapelt werden.

Mehrere übereinander gestapelte Bauteile bilden dann einen so genannten "Stack".

Die Funktion des Batterie-, Brennstoffzellen- oder Elektrolyseur-Stacks hängt entscheidend von der Stapelgenauigkeit ab. Diese gilt es, über die hohe Anzahl der Bauteile über dem kompletten Stack einzuhalten.

Aus dem Stand der Technik sind Werkstückträgereinrichtungen bekannt, auf denen eine oder mehrere Bauteile angeordnet und gestapelt werden und nach Beenden des Stapelns innerhalb der Werkstückträgereinrichtung angeordnet werden. Hierbei muss beispielsweise seitens eines Roboters, der ein Bauteil greift und auf der Werkstückträgereinrichtung anordnet, stets eine neue Ablagehöhe angefahren werden, nachdem ein Bauteil abgelegt worden ist. Die Vielzahl der jeweils neuen Ablageorte gefährdet die Stapelgenauigkeit.

Eine gattungsgemäße Werkstückträgereinrichtung ist bekannt aus EP 3 862 282 A1.

Eine Aufgabe eines Ausführungsbeispiels der Erfindung ist, eine Werkstückträgereinrichtung zum darin Anordnen und Stapeln von flächenhaften Bauteilen entlang einer Stapelrichtung vorzuschlagen, bei der eine Stapelgenauigkeit erhöht ist.

Diese Aufgabe wird bei einer eingangs genannten Werkstückträgereinrichtung gelöst durch eine erste Festlegeeinheit, durch die die mindestens eine Seitenplatte an den Stützwänden werkzeuglos entlang einer quer zur Stapelrichtung verlaufenden ersten Fügerichtung lösbar festlegbar ist.

Dadurch, dass die Werkstückträgereinrichtung, die die Auflageplatte umfassende Aufnahmeeinheit umfasst und die Auflageplatte durch den Antrieb von der Start-Aufnahmeposition stellschrittweise in die End-Aufnahmeposition überführbar ist, wobei ein Stellschritt die Erstreckung eines jeweils abgelegten Bauteils in Stapelrichtung umfasst, kann stets ein gleicher Ablageort für ein neues zu stapelndes Bauteil gewährleistet werden, der bezüglich des Raums ortsfest zumindest bezüglich der Stapelrichtung ist.

Mit Ablage eines neuen Bauteils wird die Auflageplatte durch einen Antrieb um einen weiteren Stellschritt in Richtung End-Aufnahmeposition verfahren, wobei dieser Stellschritt die Erstreckung des neu abgelegten Bauteils in Stapelrichtung umfasst.

Dadurch, dass stets der gleiche, ortsfeste Ablageort für ein neues abzulegendes Bauteil zur Verfügung gestellt wird, ist von einem Handlinggerät, wie Roboter, stets die gleiche Position anfahrbar, wodurch die Gefahr von Ungenauigkeiten beim Anfahren der Position, im Vergleich zum Anfahren stets neuer Positionen, reduziert ist und die Stapelgenauigkeit erhöht ist. Gleiches gilt, wenn dem Ablageort ein neues abzulegendes Bauteil durch eine Fördereinrichtung oder manuell zugeführt wird.

Die Grundplatte, die beiden an der Grundplatte festgelegten Stützwände sowie die beiden an den Stützwänden festgelegten Seitenplatten bilden einen korbartigen Werkstückträger. Eine Seitenplatte ist jeweils mit seinen beiden Enden an zwei Stützwänden festgelegt. Die beiden Stützwände und die beiden Seitenplatten bilden hierdurch einen quer zur Stapelrichtung vollständig umschlossenen Rahmen.

Die Bauteile können mittels eines Roboters am Ablageort angeordnet werden. Ferner können die Bauteile auch durch eine Fördereinrichtung, wie Förderband oder Schütte, oder manuell dem Ablageort zugeführt werden. Durch die Werkstückträgereinrichtung können die Anforderungen an die maschinelle oder manuelle Zuführgenauigkeit und Ablagegenauigkeit reduziert sein und die Stapelgenauigkeit durch die Ausrichteinrichtung gewährleistet werden.

Dadurch, dass die Seitenplatte werkzeuglos an den Stützwänden festlegbar ist, können Produktionszeiten optimiert werden. Dadurch, dass die Seitenplatte lösbar an den Stützwänden festlegbar ist, ist ein Entnehmen der gestapelten Bauteile erleichtert.

Es ist denkbar, dass die Grundplatte eine geschlossene Oberfläche umfasst. Solchenfalls kann die Auflageplatte an der Grundplatte in der Ruheposition flächenhaft an der Grundplatte anliegen.

Bei einer Weiterbildung der Werkstückträgereinrichtung erweist es sich als vorteilhaft, wenn die Grundplatte eine in Stapelrichtung erstreckte durchgehende Öffnung umfasst, wenn die Auflageplatte quer zur Stapelrichtung einen größeren Querschnitt umfasst, als die Öffnung in der Grundplatte und/oder wenn der Antrieb die Öffnung in der Grundplatte durchgreift.

Wenn die Grundplatte eine in Stapelrichtung erstreckte durchgehende Öffnung umfasst, kann der Antrieb die Öffnung in der Grundplatte durchgreifen. Hierdurch ist ein Anordnen und Vorsehen des Antriebs innerhalb des Freiraums nicht notwendig, wodurch der Freiraum volumenreduzierter ausgebildet werden kann oder der zur Verfügung stehende Freiraum effizienter genutzt werden kann.

Grundsätzlich ist es denkbar, dass die Seitenplatten unlösbar an den Stützwänden festgelegt sind. Darüber hinaus ist es denkbar, dass die Seitenplatten mit einem Werkzeug lösbar an den Stützwänden festgelegt sind, beispielsweise mittels Verschraubens oder Dergleichen.

Bei einer Weiterbildung letztgenannter Ausführungsform erweist es sich als vorteilhaft, wenn die erste Festlegeeinheit mindestens einen Koppelabschnitt der Seitenplatte umfasst, der in die erste Fügerichtung erstreckt ist und der in einer gefügte Anordnung auf einer dem Freiraum abgewandten Oberfläche der Stützwand angeordnet ist und/oder wenn die erste Festlegeeinheit mindestens ein betätigbares erstes Festlegemittel umfasst, das von einer Schließstellung, in der es einen Formschluss oder Kraftschluss mit dem Koppelabschnitt bildet in eine Freigabestellung überführbar ist, in der das erste Festlegemittel außer Eingriff und/oder berührungsfrei mit dem/zum Koppelabschnitt angeordnet ist.

Dadurch, dass die erste Festlegeeinheit mindestens ein Koppelabschnitt der Seitenplatte umfasst, der die Stützwand auf der dem Freiraum abgewandten Oberfläche angeordnet ist, liegt die Seitenplatte an zwei Oberflächen an der Stützwand an.

Unter einem Formschluss wird verstanden, dass das erste Festlegemittel den Koppelabschnitt bezüglich der ersten Fügerichtung hintergreift. Der Begriff Kraftschluss ist im Folgenden mit einem Reibschluss gleichzusetzen.

Es sind Ausführungsformen der Werkstückträgereinrichtung denkbar, bei denen der Koppelabschnitt durch einen L-förmigen Randabschnitt der Seitenplatte gebildet ist oder bei denen der Koppelabschnitt durch ein L-förmiges Koppelmittel gebildet ist, das an der Seitenplatte lösbar oder unlösbar festlegbar ist.

Wenn der Koppelabschnitt durch einen L-förmigen Randabschnitt der Seitenplatte gebildet ist, ist die Werkstückträgereinrichtung bauteilreduziert ausbildbar. Solchenfalls, wenn die Seitenplatte an zwei Stützwänden angeordnet ist, kann die Seitenplatte quer zur Stapelrichtung ein U-förmiges Profil umfassen. Wenn der Koppelabschnitt durch ein L-förmiges Koppelmittel gebildet ist, das an der Seitenplatte lösbar oder unlösbar festlegbar ist, können bestehende Seitenplatten einfach nachgerüstet werden.

Darüber hinaus ist bei einer Weiterbildung vorgesehen, dass die erste Festlegeeinheit mindestens eine quer zur ersten Fügerichtung erstreckte Ausnehmung, insbesondere mindestens zwei in erste Fügerichtung zueinander beabstandete Ausnehmungen, in dem Koppelabschnitt umfasst, und/oder dass die erste Festlegeeinheit mindestens ein erstes Riegelelement umfasst, das in einer der mindestens einen Ausnehmung anordenbar ist.

Dadurch, dass der Koppelabschnitt mindestens zwei in erster Fügerichtung zueinander beabstandete Ausnehmungen umfasst, ist ein Abstand der Seitenplatte quer zur Stapelrichtung einstellbar. Hierdurch kann die Werkstückträgereinrichtung einfach auf Bauteile mit unterschiedlichen Abmessungen angepasst werden.

Um ein automatisches Festlegen des Koppelabschnitts durch die Festlegeeinheit gewährleisten zu können und um das erste Festlegemittel der ersten Festlegeeinheit, insbesondere das erste Riegelelement, in die Schließstellung automatisch zu bewegen, erweist es sich als vorteilhaft, wenn die erste Festlegeeinheit ein erstes Spannmittel umfasst, durch das das erste Festlegemittel, insbesondere das erste Riegelelement, in die Schließstellung spannbar ist.

Um die Stapelgenauigkeit der abgelegten Bauteile zu erhöhen, ist bei einer Weiterbildung der Werkstückträgereinrichtung mindestens ein bolzenartiges Führungsmittel vorgesehen, das mit einem Führungsabschnitt in einer in erste Fügerichtung erstreckte durchgehende Aussparung in der Seitenplatte angeordnet ist und mit einem freien Ende des Führungsabschnitts mittelbar oder unmittelbar an der Stützwand festgelegt ist und/oder das einen Kopfabschnitt aufweist, der quer zur ersten Fügerichtung einen größeren Durchmesser aufweist, als die Aussparung, wobei die Erstreckung des Führungsabschnitts entlang der ersten Fügerichtung größer ist, als die Dicke der Seitenplatte.

Durch den Führungsabschnitt, dessen Erstreckung entlang der ersten Fügerichtung größer ist als die Dicke der Seitenplatte, ist die Seitenplatte begrenzt geführt bewegbar. Durch den Kopfabschnitt des Führungsmittels ist ein Anschlag gebildet, der die relative Bewegung der Seitenplatte zur Stützwand begrenzt. Hierdurch ist ein genaues Ausrichten der Seitenplatte bezüglich der Stützwand verbessert und eine Stapelgenauigkeit steigerbar.

Um zu gewährleisten, dass die Seitenplatten beim Lösen der ersten Festlegeeinheit automatisch zu den mindestens einen Bauteil beabstandet wird, umfasst ein Ausführungsbeispiel der Werkstückträgereinrichtung mindestens ein Federmittel, das zwischen Seitenplatte und Stützwand angeordnet ist und durch das die Seitenplatte mit einer entgegen der ersten Fügerichtung wirkenden Federkraft beaufschlagbar ist.

Wenn die Werkstückträgereinrichtung das bolzenartige Führungsmittel umfasst, wird die Seitenwand durch das Federmittel automatisch in Richtung Kopfabschnitt des bolzenartigen Führungsmittels gespannt.

Grundsätzlich ist es denkbar, dass das mindestens eine zu stapelnde Bauteil unmittelbar an den Seitenplatten und den Stützwänden anliegt und durch diese bei einem Bewegen in Stapelrichtung geführt wird.

Bei einer Weiterbildung der Werkstückträgereinrichtung umfasst diese mindestens einen ersten Führungsdorn, der an einer Seitenplatte angeordnet ist und das Bauteil zur Seitenplatte berührungsfrei beanstandet und der eine Führungskante aufweist, die parallel zur Stapelrichtung verläuft und sich in Gänze oder zumindest teilweise durch den Freiraum erstreckt und die in einer korrespondierend, insbesondere komplementär, ausgebildeten Nut im Bauteil am Bauteil anliegend anordenbar ist, und/oder mindestens einen zweiten Führungsdorn, der an einer Stützwand angeordnet ist und das Bauteil zur Stützwand berührungsfrei beanstandet und der eine Führungskante aufweist, die parallel zur Stapelrichtung verläuft und sich in Gänze oder zumindest teilweise durch den Freiraum erstreckt und die in einer korrespondierend, insbesondere komplementär, ausgebildeten Nut im Bauteil am Bauteil anliegend anordenbar ist.

Durch das Vorsehen mindestens eines ersten Führungsdorns, der mit seiner Führungskante in eine korrespondierend, insbesondere komplementär ausgebildete Nut im Bauteil eingreift und das Bauteil zur Seitenplatte beabstandet, und durch den zweiten Führungsdorn, der an der Stützwand angeordnet ist und das Bauteil zur Seitenwand beabstandet, kann die Bewegung des Bauteils in Stapelrichtung geführt werden und die Gefahr eines Verkantens reduziert werden.

Darüber hinaus ist das Eingreifen der Führungskante des ersten Führungsdorns in die Nut im Bauteil und der Führungskante des zweiten Führungsdorns in die entsprechende Nut des Bauteils eine Stapelgenauigkeit steigerbar.

Dadurch, dass der mindestens eine erste Führungsdorn an einer Seitenplatte angeordnet ist, ist dieser mit dem Festlegen der Seitenplatte an der Stützwand ebenfalls im Freiraum positioniert. Mit dem Lösen der Seitenplatte bewegt sich auch der erste Führungsdorn, der relativ zur Seitenplatte ortsfest an dieser festgelegt ist.

Um zum Entfernen der Bauteile auch den zweiten Führungsdorn außer Eingriff mit der Nut des Bauteils zu bringen, ist bei einer Weiterbildung der Werkstückträgereinrichtung mindestens eine zweite Festlegeeinheit vorgesehen, durch die der mindestens eine an der Stützwand festgelegte zweite Führungsdorn werkzeuglos entlang einer quer zur Stapelrichtung und quer zur ersten Fügerichtung verlaufenden zweiten Fügerichtung lösbar festlegbar ist.

Dadurch, dass die Werkstückträgereinrichtung eine zweite Festlegeeinheit umfasst, durch die der zweite Führungsdorn werkzeuglos entlang der zweiten Fügerichtung lösbar festlegbar ist, kann zum Entfernen der Bauteile aus der Werkstückträgereinrichtung der mindestens eine zweite Führungsdorn unmittelbar und der mindestens eine erste Führungsdorn mittelbar durch Verschieben der Seitenwand außer Eingriff mit der jeweiligen Nut im Bauteil gebracht werden.

Bei einer Weiterbildung der zweiten Festlegeeinheit erweist es sich als vorteilhaft, wenn die zweite Festlegeeinheit mindestens ein Koppelelement umfasst, an dem der zweite Führungsdorn angeordnet ist und das durch eine Durchbrechung in der Stützwand bewegbar angeordnet und entlang der zweiten Fügerichtung bewegbar ist und das in einer festgelegten Anordnung auf einer dem Freiraum abgewandten Oberfläche der Stützwand zugänglich ist und/oder wenn die zweite Festlegeeinheit mindestens ein betätigbares zweites Festlegemittel umfasst, das von einer Schließstellung, in der es einen Formschluss oder Kraftschluss mit dem Koppelelement bildet in eine Freigabestellung überführbar ist, in der das zweite Festlegemittel außer Eingriff und/oder berührungsfrei mit dem/zum Koppelelement angeordnet ist.

Bei einer Weiterbildung letztgenannter Ausführungsform erweist es sich als vorteilhaft, wenn die zweite Festlegeeinheit mindestens eine quer zur Fügerichtung erstreckte Ausnehmung, insbesondere mindestens zwei entlang der zweiten Fügerichtung zueinander beabstandete Ausnehmungen, in dem Koppelelement umfasst, wenn das die zweite Festlegeeinheit mindestens ein zweites Riegelelement, das in einer der mindestens einen Ausnehmung anordenbar ist und/oder wenn die zweite Festlegeeinheit mindestens ein zweites Spannmittel umfasst, durch das das zweite Festlegemittel, insbesondere das zweite Riegelelement, in die Schließstellung spannbar ist.

Solchenfalls ist die Eindringtiefe des zweiten Führungsdorns in den Freiraum einstellbar. Darüber hinaus kann bei einer Weiterbildung vorgesehen sein, dass mindestens zwei Ausnehmungen bezüglich der zweiten Fügerichtung auf derselben Höhe, aber quer zur zweiten Fügerichtung zueinander beabstandet angeordnet sind. Solchenfalls können auch mindestens zwei zweite Riegelelemente vorgesehen sein, wobei jeweils ein zweites Riegelelement in eine der Ausnehmungen eingreift. Solchenfalls ist die Stabilität steigerbar.

Um die Stapelgenauigkeit der Bauteile weiter zu erhöhen, umfasst ein Ausführungsbeispiel der Werkstückträgereinrichtung vier erste Führungsdorne, von denen jeweils zwei erste Führungsdorne an einer Seitenplatte festgelegt sind und/oder zwei zweite Führungsdorne, von denen jeweils ein zweiter Führungsdorn an einer Stützwand festgelegt ist.

Solchenfalls ist an jeder Stützwand ein zweiter Führungsdorn angeordnet und an jeder Seitenplatte zwei erste Führungsdorne. Hierdurch ist ein Beabstanden des zu stapelnden Bauteils zu den Seitenplatten und den Stützwänden auf einfache Weise gewährleistbar. Die ersten Führungsdorne und die zweiten Führungsdorne greifen entsprechend in die Nuten in den Bauteilen ein. Entsprechend sind die ersten Führungsdorne und die zweiten Führungsdorne an den Seitenplatten, bzw. den Stützwänden angeordnet.

Schließlich erweist es sich als vorteilhaft, wenn mindestens eines des mindestens einen Bauteils oder mehrere Bauteile einen Stack für eine elektronische Komponente, wie Brennstoffzelle, Batterie oder Elektrolyseur, umfasst, insbesondere eine Membran-Elektrodeneinheit (MEA), eine Bipolarplatte (BBP) und/oder ein Elektrolyseurbauteil zum Bilden einer Brennstoffzelle, einer Batterie oder eines Elektrolyseurs.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Werkstückträgereinrichtung.

In der Zeichnung zeigt:
- Figur 1: Eine perspektivische Vorderansicht auf ein Ausführungsbeispiel der Werkstückträgereinrichtung;

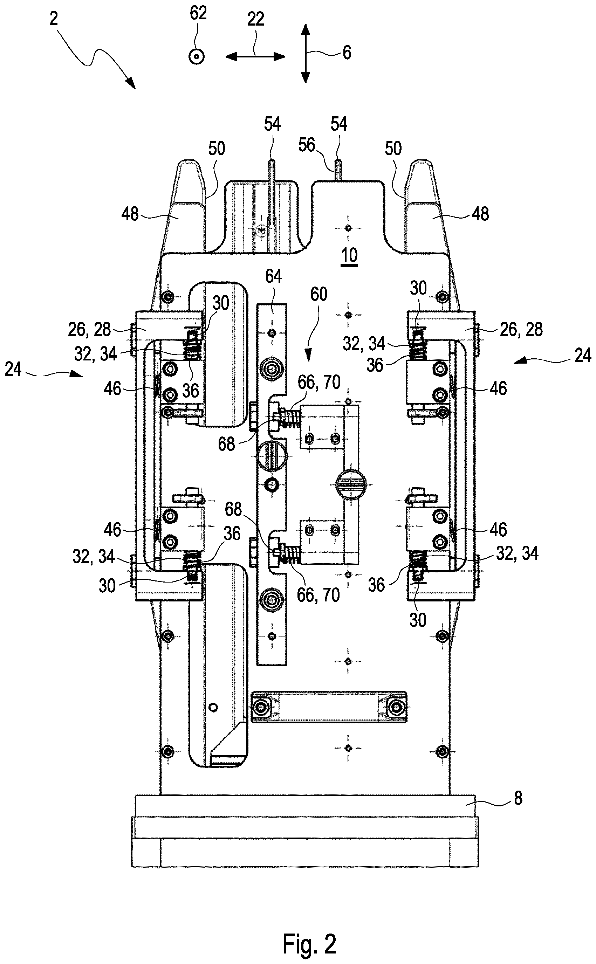

- Figur 2: Eine perspektivische Detailansicht einer Stützwand der Werkstückträgereinrichtung gemäß Figur 1.

Die Figuren zeigen eine insgesamt mit dem Bezugszeichen 2 versehene Werkstückträgereinrichtung zum darin Anordnen und Stapeln von flächenhaften Bauteilen entlang einer Stapelrichtung 6. Die Werkstückträgereinrichtung 2 umfasst mindestens eine Grundplatte 8 sowie zwei einander gegenüberliegende und an der Grundplatte 8 festgelegte Stützwände 10. Darüber hinaus umfasst die Werkstückträgereinrichtung 2 zwei Seitenplatten 12, die an den Stützwänden 10 festgelegt und zur Bodenplatte 8 beabstandet sind. Die beiden Seitenplatten 12 und die beiden Stützwände 10 umgeben einen zumindest in Stapelrichtung 6 zugänglichen Freiraum 14.

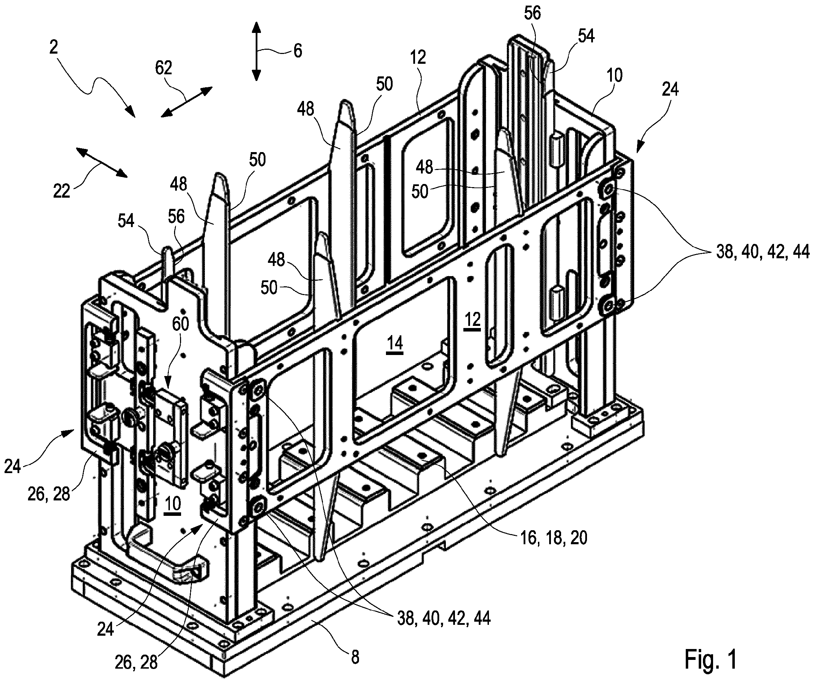

Die Werkstückträgereinrichtung 2 umfasst eine Aufnahmeeinheit 16, die eine Auflageplatte 18 und einen Antrieb 20 umfasst. Durch den Antrieb 20 ist die Auflageplatte 18 von einer Ruheposition (Figur 1), in der die Auflageplatte 18 an der Grundplatte 8 anliegt, in eine Start-Aufnahmeposition, in der unmittelbar an der Auflageplatte 18 ein Bauteil anordenbar ist und in der ein Abstand von Auflageplatte 18 und Grundplatte 8 maximal ist und stellschrittweise in eine Mehrzahl von Zwischen-Aufnahmepositionen bis zum Erreichen einer End-Aufnahmeposition überführbar ist, in der eine vorgebbare Anzahl von Bauteilen 4 auf der Auflageplatte 18 gestapelt sind. Ein jeweiliger Stellschritt umfasst jeweils die Erstreckung des jeweils abgelegten Bauteils in Stapelrichtung 6.

Bei dem in den Figuren gezeigten Ausführungsbeispiel sind die Seitenplatten 12 werkzeuglos entlang einer quer zur Stapelrichtung 6 verlaufenden ersten Fügerichtung 22 werkzeuglos lösbar festgelegt. Hierzu umfasst die Werkstückträgereinrichtung 2 mehrere erste Festlegeeinheiten 24, durch die die Seitenplatten 12 jeweils auf beiden Seiten an jeweils einer Stützwand 10 festlegbar sind.

Die ersten Festlegeeinheiten 24 umfassen jeweils Koppelabschnitte 26 der Seitenplatten 12, die bei dem in den Figuren gezeigten Ausführungsbeispiel durch L-förmige Koppelmittel 28 gebildet sind, die an den Seitenrändern der Seitenplatten 12 angeordnet sind. In den Koppelabschnitten 26 sind jeweils quer zur ersten Fügerichtung 22 erstreckte Ausnehmungen 30 vorgesehen, in der erste Festlegemittel 32, insbesondere erste Riegelelement 34, eingreifbar sind und einen Hintergriff, also einen Formschluss, bezüglich der ersten Fügerichtung 22 bilden.

Die ersten Festlegemittel 32, bzw. ersten Riegelelemente 34, sind durch erste Spannmittel 36 in eine Schließstellung spannbar, in der die ersten Festlegemittel 32, insbesondere die ersten Riegelelemente 34, in den Ausnehmungen 30 der Koppelabschnitte 26 angeordnet sind.

Zum Entfernen, bzw. zum Bewegen der Seitenplatten 12 relativ zu den Stützwänden 10, werden die ersten Festlegemittel 32, insbesondere die ersten Riegelelemente 34, entgegen der Wirkungskraft der Spannmittel 36 bewegt, wodurch diese außer Eingriff mit den Ausnehmungen 30 gelangen. Dieses ermöglicht ein Bewegen der Seitenplatten 12 entgegen der ersten Fügerichtung 22.

Um eine Bewegung der Seitenplatten 12 relativ zu den Stützwänden 10 zu führen und zu begrenzen, umfasst die Werkstückträgereinrichtung 2 bolzenartige Führungsmittel 38, die mit einem Führungsabschnitt 40 in einer in erster Fügerichtung 22 erstreckte durchgehende Aussparung 42 angeordnet ist, um mit einem freien Ende des Führungsabschnitts 40 mittelbar oder unmittelbar an der Stützwand 10 festgelegt ist und auf der dem freien Ende abgewandten Seite einen Kopfabschnitt 44 aufweist, der einen größten Durchmesser quer zur ersten Fügerichtung 22 aufweist, als die Aussparung 42. Der Führungsabschnitt 40 umfasst eine Erstreckung entlang der ersten Fügerichtung 22, die größer ist als die Dicke der Seitenplatte 12, wodurch diese eine Relativbewegung bezüglich der Stützwand 10 durchführen kann, wenn die erste Festlegeeinheit 24 in einer Freigabestellung angeordnet ist.

Um die Seitenplatten 12 automatisch in Richtung weg von den Bauteilen 4 zu bewegen, umfasst die Werkstückträgereinrichtung 2 Federmittel 46, die jeweils zwischen den Seitenplatten 12 und den Stützwänden 10 angeordnet sind und durch die die Seitenplatten 12 entgegen der ersten Fügerichtung 22 wirkenden Federkraft beaufschlagbar sind.

Bei dem in den Figuren ersichtlichen Ausführungsbeispiel umfasst die Werkstückträgereinrichtung 2 vier erste Führungsdorne 48, von denen jeweils zwei erste Führungsdorne 48 an einer Seitenplatte 12 angeordnet sind und das Bauteil zur jeweiligen Seitenplatte 12 berührungsfrei beabstanden.

Die ersten Führungsdorne 48 umfassen jeweils eine Führungskante 50, die parallel zur Stapelrichtung 6 verläuft und sich in Gänze oder zumindest teilweise durch den Freiraum 14 erstreckt. Die Führungskanten 50 sind korrespondierend, insbesondere komplementär, zu einer Nut am Bauteil ausgebildet und liegen dort an.

Darüber hinaus umfasst die Werkstückträgereinrichtung 2 bei dem in den Figuren ersichtlichen Ausführungsbeispiel zwei zweite Führungsdorne 54, von denen jeweils ein zweiter Führungsdorn 54 an einer Stützwand 10 angeordnet ist. Durch die zweiten Führungsdorne 54 sind die Bauteile zu den Stützwänden 10 beabstandbar. Die zweiten Führungsdorne 54 umfassen auch eine Führungskante 56, die parallel zur Stapelrichtung 6 verlaufen und sich in Gänze oder teilweise durch den Freiraum 14 erstrecken. Die Führungskanten 56 der zweiten Führungsdorne 54 greifen in eine korrespondierend, insbesondere komplementär, ausgebildeten Nut am Bauteil anliegend ein.

Um die zweiten Führungsdorne 54, die an den Stützwänden 10 angeordnet sind, von den Bauteilen wegbewegen zu können, umfasst die Werkstückträgereinrichtung 2 zweite Festlegeeinheiten 60, durch die der mindestens eine an der Stützwand 10 festgelegte zweite Führungsdorn 54 werkzeuglos entlang einer quer zur Stapelrichtung 6 und quer zur ersten Fügerichtung 22 verlaufenden zweiten Fügerichtung 62 lösbar festlegbar ist. Die zweiten Festlegeeinheiten 60 umfassen ein Koppelelement 64, an dem ein zweiter Führungsdorn 54 angeordnet ist und das durch eine Durchbrechung in der Stützwand 10 bewegbar angeordnet und entlang der zweiten Fügerichtung 62 bewegbar ist. Die zweite Festlegeeinheit 60 umfasst mindestens ein betätigbares zweites Festlegemittel 66, das von einer Schließstellung, in der es einen Formschluss mit dem Koppelelement 64 bildet, in eine Freigabestellung überführbar ist, in der das zweite Festlegemittel 66 außer Eingriff und berührungsfrei zu dem Koppelelement 64 angeordnet ist. Die zweite Festlegeeinheit 60 umfasst bei dem in den Figuren gezeigten Ausführungsbeispiel zwei Ausnehmungen 68, die in Stapelrichtung 6 zueinander beabstandet sind und in die die zweite Festlegeeinheit 60 mit jeweils einem zweiten Riegelelement 70 eingreift und einen Hintergriff bezüglich der zweiten Fügerichtung 62 bildet.

Beim Überführen der zweiten Festlegeeinheit 60 in die Freigabestellung sind die zweiten Führungsdorne 54 von den Bauteilen 4 wegbewegbar.

### Bezugszeichenliste

- 2: Werkstückträgereinrichtung
- 6: Stapelrichtung
- 8: Grundplatte
- 10: Stützwand
- 12: Seitenplatte
- 14: Freiraum
- 16: Aufnahmeeinheit
- 18: Auflageplatte
- 20: Antrieb
- 22: erste Fügerichtung
- 24: erste Festlegeeinheit
- 26: Koppelabschnitt
- 28: Koppelmittel
- 30: Ausnehmung
- 32: erstes Festlegemittel
- 34: erstes Riegelelement
- 36: erstes Spannmittel
- 38: Führungsmittel
- 40: Führungsabschnitt
- 42: Aussparung
- 44: Kopfabschnitt
- 46: Federmittel
- 48: erster Führungsdorn
- 50: Führungskante
- 54: zweiter Führungsdorn
- 56: Führungskante
- 60: zweite Festlegeeinheit
- 62: zweite Fügerichtung
- 64: Koppelelement
- 66: zweites Festlegemittel
- 68: Ausnehmung
- 70: zweites Riegelelement

## Patentansprüche

1. Werkstückträgereinrichtung (2) zum darin Anordnen und Stapeln von flächenhaften Bauteilen entlang einer Stapelrichtung (6), mit mindestens einer Grundplatte (8), mit mindestens zwei einander gegenüberliegenden und an der Grundplatte (8) festgelegten Stützwänden (10), mit mindestens zwei Seitenplatten (12), die an den Stützwänden (10) festgelegt und zur Grundplatte (8) beanstandet sind und die mit den Stützwänden (10) und der Grundplatte (8) einen zumindest in Stapelrichtung (6) zugänglichen Freiraum (14) umgeben, mit mindestens einer Aufnahmeeinheit (16), die eine Auflageplatte (18) und die einen Antrieb (20) umfasst, durch den die Auflageplatte (18) von einer Ruheposition, in der die Auflageplatte (18) an der Grundplatte (8) anliegt, in eine Start-Aufnahmeposition, in der unmittelbar an der Auflageplatte (18) ein Bauteil anordenbar ist und in der ein Abstand von Auflageplatte (18) und Grundplatte (8) maximal ist, und stellschrittweise in eine Mehrzahl von Zwischen-Aufnahmepositionen bis zum Erreichen einer End-Aufnahmeposition überführbar ist, in der eine vorgebbare Anzahl von Bauteilen auf der Auflageplatte (18) gestapelt sind, wobei ein Stellschritt die Erstreckung des jeweils abgelegten Bauteils in Stapelrichtung (6) umfasst und ein Ablageort zum Ablegen eines neuen Bauteils ortsfest durch die Auflageplatte (18) in der Start-Aufnahmeposition oder in den Zwischen-Aufnahmepositionen und der End-Aufnahmeposition durch die der Auflageplatte (18) abgewandte freie Oberfläche des Bauteils gebildet ist, die zur Auflageplatte (18) den größten Abstand umfasst, **gekennzeichnet durch** eine erste Festlegeeinheit (24), durch die die mindestens eine Seitenplatte (12) an den Stützwänden (10) werkzeuglos entlang einer quer zur Stapelrichtung (6) verlaufenden ersten Fügerichtung (22) lösbar festlegbar ist.

2. Werkstückträgereinrichtung (2) nach Anspruch 1, **dadurch gekennzeichnet, dass** die Grundplatte (8) eine in Stapelrichtung (6) erstreckte durchgehende Öffnung umfasst, dass die Auflageplatte (18) quer zur Stapelrichtung (6) einen größeren Querschnitt umfasst, als die Öffnung in der Grundplatte (8) und/oder dass der Antrieb (20) die Öffnung in der Grundplatte (8) durchgreift.

3. Werkstückträgereinrichtung (2) nach einem der vorhergehenden Ansprüche, **dadurch gekennzeichnet, dass** die erste Festlegeeinheit (24) mindestens einen Koppelabschnitt (26) der Seitenplatte (12) umfasst, der in die erste Fügerichtung (22) erstreckt ist und der in einer gefügte Anordnung auf einer dem Freiraum (14) abgewandten Oberfläche der Stützwand (10) angeordnet ist und/oder dass die erste Festlegeeinheit (24) mindestens ein betätigbares erstes Festlegemittel (32) umfasst, das von einer Schließstellung, in der es einen Formschluss oder Kraftschluss mit dem Koppelabschnitt (26) bildet in eine Freigabestellung überführbar ist, in der das erste Festlegemittel (32) außer Eingriff und/oder berührungsfrei mit dem/zum Koppelabschnitt (26) angeordnet ist.

4. Werkstückträgereinrichtung (2) nach Anspruch 3, **dadurch gekennzeichnet, dass** der Koppelabschnitt (26) durch einen L-förmigen Randabschnitt der Seitenplatte (12) gebildet ist oder dass der Koppelabschnitt (26) durch ein L-förmiges Koppelmittel (28) gebildet ist, das an der Seitenplatte (12) lösbar oder unlösbar festlegbar ist.

5. Werkstückträgereinrichtung (2) nach Anspruch 3 oder 4, **dadurch gekennzeichnet, dass** die erste Festlegeeinheit (24) mindestens eine quer zur ersten Fügerichtung (22) erstreckte Ausnehmung (30), insbesondere mindestens zwei in erste Fügerichtung (22) zueinander beabstandete Ausnehmungen (30), in dem Koppelabschnitt (26) umfasst, und/oder dass die erste Festlegeeinheit (24) mindestens ein erstes Riegelelement (34) umfasst, das in einer der mindestens einen Ausnehmung (30) anordenbar ist.

6. Werkstückträgereinrichtung (2) nach einem der Ansprüche 3 bis 5, **dadurch gekennzeichnet, dass** die erste Festlegeeinheit (24) ein erstes Spannmittel (36) umfasst, durch das das erste Festlegemittel (32), insbesondere das erste Riegelelement (34), in die Schließstellung spannbar ist.

7. Werkstückträgereinrichtung (2) nach einem der Ansprüche 2 bis 6, **gekennzeichnet durch** mindestens ein bolzenartiges Führungsmittel (38), das mit einem Führungsabschnitt (40) in einer in erste Fügerichtung (22) erstreckte durchgehende Aussparung (42) in der Seitenplatte (12) angeordnet ist und mit einem freien Ende des Führungsabschnitts (40) mittelbar oder unmittelbar an der Stützwand (10) festgelegt ist und/oder das einen Kopfabschnitt (44) aufweist, der quer zur ersten Fügerichtung (22) einen größeren Durchmesser aufweist, als die Aussparung (42), wobei die Erstreckung des Führungsabschnitts (40) entlang der ersten Fügerichtung (22) größer ist, als die Dicke der Seitenplatte (12).

8. Werkstückträgereinrichtung (2) nach einem der Ansprüche 2 bis 7, **gekennzeichnet durch** mindestens ein Federmittel (46), das zwischen Seitenplatte (12) und Stützwand (10) angeordnet ist und durch das die Seitenplatte (12) mit einer entgegen der ersten Fügerichtung (22) wirkenden Federkraft beaufschlagbar ist.

9. Werkstückträgereinrichtung (2) nach einem der vorhergehenden Ansprüche, **gekennzeichnet durch** mindestens einen ersten Führungsdorn (48), der an einer Seitenplatte (12) angeordnet ist und das Bauteil zur Seitenplatte (12) berührungsfrei beanstandet und der eine Führungskante (50) aufweist, die parallel zur Stapelrichtung (6) verläuft und sich in Gänze oder zumindest teilweise durch den Freiraum (14) erstreckt und die in einer korrespondierend, insbesondere komplementär, ausgebildeten Nut im Bauteil am Bauteil anliegend anordenbar ist, und/oder durch mindestens einen zweiten Führungsdorn (54), der an einer Stützwand (10) angeordnet ist und das Bauteil zur Stützwand (10) berührungsfrei beanstandet und der eine Führungskante (56) aufweist, die parallel zur Stapelrichtung (6) verläuft und sich in Gänze oder zumindest teilweise durch den Freiraum (14) erstreckt und die in einer korrespondierend, insbesondere komplementär, ausgebildeten Nut im Bauteil am Bauteil anliegend anordenbar ist.

10. Werkstückträgereinrichtung (2) nach Anspruch 9, **gekennzeichnet durch** eine zweite Festlegeeinheit (60), durch die der mindestens eine an der Stützwand (10) festgelegte zweite Führungsdorn (54) werkzeuglos entlang einer quer zur Stapelrichtung (6) und quer zur ersten Fügerichtung (22) verlaufenden zweiten Fügerichtung (62) lösbar festlegbar ist.

11. Werkstückträgereinrichtung (2) nach Anspruch 10, **dadurch gekennzeichnet, dass** die zweite Festlegeeinheit (60) mindestens ein Koppelelement (64) umfasst, an dem der zweite Führungsdorn (54) angeordnet ist und das durch eine Durchbrechung in der Stützwand (10) bewegbar angeordnet und entlang der zweiten Fügerichtung (62) bewegbar ist und das in einer festgelegten Anordnung auf einer dem Freiraum (14) abgewandten Oberfläche der Stützwand (10) zugänglich ist und/oder dass die zweite Festlegeeinheit (60) mindestens ein betätigbares zweites Festlegemittel (66) umfasst, das von einer Schließstellung, in der es einen Formschluss oder Kraftschluss mit dem Koppelelement (64) bildet in eine Freigabestellung überführbar ist, in der das zweite Festlegemittel (66) außer Eingriff und/oder berührungsfrei mit dem/zum Koppelelement (64) angeordnet ist.

12. Werkstückträgereinrichtung (2) nach Anspruch 11, **dadurch gekennzeichnet, dass** die zweite Festlegeeinheit (60) mindestens eine quer zur Fügerichtung (62) erstreckte Ausnehmung (68), insbesondere mindestens zwei entlang der zweiten Fügerichtung (62) zueinander beabstandete Ausnehmungen (68), in dem Koppelelement (64) umfasst, dass das die zweite Festlegeeinheit (60) mindestens ein zweites Riegelelement (70), das in einer der mindestens einen Ausnehmung (68) anordenbar ist und/oder dass die zweite Festlegeeinheit (60) mindestens ein zweites Spannmittel umfasst, durch das das zweite Festlegemittel (66), insbesondere das zweite Riegelelement (70), in die Schließstellung spannbar ist.

13. Werkstückträgereinrichtung (2) nach einem der vorhergehenden Ansprüche, **gekennzeichnet durch** vier erste Führungsdorne (48), von denen jeweils zwei erste Führungsdorne (54) an einer Seitenplatte (12) festgelegt sind und/oder durch zwei zweite Führungsdorne (54), von denen jeweils ein zweiter Führungsdorn (54) an einer Stützwand (10) festgelegt ist.

14. Werkstückträgereinrichtung (2) nach einem der vorhergehenden Ansprüche, **dadurch gekennzeichnet, dass** mindestens eines des mindestens einen Bauteils oder mehrere Bauteile einen Stack für eine elektronische Komponente, wie Brennstoffzelle, Batterie oder Elektrolyseur, umfasst, insbesondere eine Membran-Elektrodeneinheit (MEA), eine Bipolarplatte (BBP) und/oder ein Elektrolyseurbauteil zum Bilden einer Brennstoffzelle, einer Batterie oder eines Elektrolyseurs.

## Claims

1. Workpiece carrier device (2) for arranging and stacking flat components therein along a stacking direction (6), comprising at least one base plate (8), at least two opposing support walls (10) fixed to the base plate (8), and at least two side plates (12) that are fixed to the support walls (10) and the base plate (8), which together with the support walls (10) and the base plate (8) enclose a free space (14) accessible at least in the stacking direction (6), with at least one receiving unit (16) that comprises a support plate (18) and a drive mechanism (20) by which the support plate (18) can be moved from a rest position where it abuts the base plate (8) to a start receiving position, in which a component can be directly arranged on the support plate (18) and in which a distance between the support plate (18) and the base plate (8) is at its maximum, and the support plate (18) can then be moved incrementally into a plurality of intermediate receiving positions until it reaches a final receiving position, in which a predefined number of components can stacked on the support plate (18), wherein each incremental step involves extending the respective component placed in the stacking direction (6) and the placement location for adding a new component is determined in a fixed manner by the position of the support plate (18) in the start receiving position, intermediate receiving positions and final receiving position, formed by the free surface of the component facing away from the support plate (18), which is at the greatest distance from the support plate (18), **characterised by** a first fixing unit (24) by which the at least one side plate (12) can be detachably locked to the support walls (10) without tools along a first joining direction (22) extending transversely to the stacking direction (6).

2. Workpiece carrier device (2) according to Claim 1, **characterised in that** the base plate (8) comprises a continuous opening extending in the stacking direction (6), that the support plate (18) has a larger cross section transversely to the stacking direction (6) than the opening in the base plate (8) and/or that the drive mechanism (20) passes through the opening in the base plate (8).

3. Workpiece carrier device (2) according to one of the preceding claims, **characterised in that** the first fixing unit (24) comprises at least one coupling section (26) of the side plate (12) which extends in the first joining direction (22) and which is arranged in a joined arrangement on a surface of the support wall (10) facing away from the free space (14) is arranged and/or that the first fixing unit (24) comprises at least one operable first fixing means (32) which can be transferred from a closed position in which it forms a positive connection or frictional connection with the coupling section (26) to a release position in which the first fixing means (32) is disengaged and/or arranged in a contact-free manner with/to the coupling section (26).

4. Workpiece carrier device (2) according to Claim 3, **characterised in that** the coupling section (26) is formed by an L-shaped edge section of the side plate (12) or that the coupling section (26) is formed by an L-shaped coupling means (28), which can be detachably or non-detachably fixed to the side plate (12).

5. Workpiece carrier device (2) according to Claim 3 or 4, **characterised in that** the first fixing unit (24) comprises at least one recess (30) extending transversely to the first joining direction (22), in particular at least two recesses (30) spaced apart from each other in the first joining direction (22), in the coupling section (26), and/or that the first fixing unit (24) comprises at least one first locking element (34) which can be arranged in one of the at least one recess (30).

6. Workpiece carrier device (2) according to one of Claims 3 to 5, **characterised in that** the first fixing unit (24) comprises a first clamping means (36), through which the first fixing means (32), in particular the first locking element (34), can be clamped into the closed position.

7. Workpiece carrier device (2) according to one of Claims 2 to 6, **characterised by** at least one bolt-like guiding means (38) which is arranged with a guiding section (40) in a continuous cutout (42) in the side plate (12) extending in the first joining direction (22) and is fixed directly or indirectly to the support wall (10) with a free end of the guide section (40) and/or which has a head section (44) which has a larger diameter transversely to the first joining direction (22) than the cutout (42), wherein the extension of the guiding section (40) along the first joining direction (22) is greater than the thickness of the side plate (12).

8. Workpiece carrier device (2) according to one of Claims 2 to 7, **characterised by** at least one spring means (46) arranged between the side plate (12) and the support wall (10) and by means of which the side plate (12) can be acted upon with a spring force acting counter to the first joining direction (22).

9. Workpiece carrier device (2) according to one of the preceding claims, **characterised by** at least one first guide pin (48) arranged on a side plate (12) and which abuts the component to the side plate (12) in a contact-free manner and which has a guiding edge (50) which runs parallel to the stacking direction (6) and extends entirely or at least partially through the free space (14) and can be arranged on the component in abutting contact with a correspondingly, in particular complementarily, formed groove in the component, and/or by at least one second guide pin (54) arranged on a support wall (10) and which abuts the component to the support wall (10) in a contact-free manner and which has a guiding edge (56) which runs parallel to the stacking direction (6) and extends entirely or at least partially through the free space (14) and can be arranged on the component in abutting contact with a correspondingly, in particular complementarily, formed groove in the component.

10. Workpiece carrier device (2) according to Claim 9, **characterised by** a second fixing unit (60), by means of which the at least one second guide pin (54) fixed to the supporting wall (10) can be detachably fixed without tools along a second joining direction (62) extending transversely to the stacking direction (6) and transversely to the first joining direction (22).

11. Workpiece carrier device (2) according to Claim 10, **characterised in that** the second fixing unit (60) comprises at least one coupling element (64) on which the second guide pin (54) is arranged and which is movably arranged through an opening in the support wall (10) and is movable along the second joining direction (62) and is accessible in a fixed arrangement on a surface of the support wall (10) facing away from the free space (14) and/or that the second fixing unit (60) comprises at least one operable second fixing means (66), which can be moved from a closed position in which it forms a positive or frictional connection with the coupling element (64) into a release position in which the second fixing means (66) is disengaged and/or arranged in a contact-free manner with the coupling element (64).

12. Workpiece carrier device (2) according to Claim 11, **characterised in that** the second fixing unit (60) comprises at least one recess (68) extending transversely to the joining direction (62), in particular at least two recesses (68) spaced apart from each other along the second joining direction (62), in the coupling element (64), that the second fixing unit (60) comprises at least one second locking element (70) which can be arranged in one of the at least one recess (68) and/or that the second fixing unit (60) comprises at least one second clamping means by means of which the second fixing means (66), in particular the second locking element (70), can be clamped into the closed position.

13. Workpiece carrier device (2) according to one of the preceding claims, **characterised by** four first guide pins (48), of which two first guide pins (54) are fixed to a side plate (12) and/or two second guide pins (54), of which one second guide pin (54) is each fixed to a support wall (10).

14. Workpiece carrier device (2) according to one of the preceding claims, **characterised in that** at least one of the at least one component or several components comprises a stack for an electronic component, such as a fuel cell, battery or electrolyser, in particular a membrane electrode unit (MEA), a bipolar plate (BBP) and/or an electrolyser component for forming a fuel cell, a battery or an electrolyser.

## Revendications

1. Dispositif porte-pièce (2) pour y disposer et y empiler des composants plats le long d'une direction d'empilage (6), avec au moins une plaque de base (8), avec au moins deux parois d'appui (10) opposées l'une à l'autre et fixées sur la plaque de base (8), avec au moins deux plaques latérales (12) qui sont fixées sur les parois d'appui (10) et sont espacées par rapport à la plaque de base (8) et qui entourent avec les parois d'appui (10) et la plaque de base (8) un espace libre (14) accessible au moins dans la direction d'empilage (6), avec au moins une unité de réception (16) qui comprend une plaque d'appui (18) et qui comprend un entraînement (20) par lequel la plaque d'appui (18) peut être transférée d'une position de repos, dans laquelle la plaque d'appui (18) s'applique contre la plaque de base (8), dans une position de réception de départ, dans laquelle un composant peut être disposé directement sur la plaque d'appui (18) et dans laquelle un intervalle entre la plaque d'appui (18) et la plaque de base (8) est maximal, et par étapes de réglage dans une pluralité de positions de réception intermédiaires jusqu'à atteindre une position de réception finale, dans laquelle un nombre pré-définissable de composants sont empilés sur la plaque d'appui (18), une étape de réglage comprenant l'extension du composant respectivement déposé dans la direction d'empilage (6) et un lieu de dépôt pour déposer un nouveau composant étant formé de manière fixe par la plaque d'appui (18) dans la position de réception initiale ou dans les positions de réception intermédiaires et la position de réception finale par la surface libre du composant opposée à la plaque d'appui (18), qui comprend la plus grande distance par rapport à la plaque d'appui (18), **caractérisé par** une première unité de fixation (24) par laquelle au moins une plaque latérale (12) peut être fixée de manière amovible aux parois d'appui (10) sans outil le long d'une première direction d'assemblage (22) s'étendant transversalement à la direction d'empilage (6).

2. Dispositif porte-pièce (2) selon la revendication 1, **caractérisé en ce que** la plaque de base (8) comprend une ouverture traversante s'étendant dans la direction d'empilage (6), **en ce que** la plaque d'appui (18) comprend une section transversale plus grande que l'ouverture dans la plaque de base (8), transversalement à la direction d'empilage (6), et/ou **en ce que** l'entraînement (20) traverse l'ouverture dans la plaque de base (8).

3. Dispositif porte-pièce (2) selon l'une des revendications précédentes, **caractérisé en ce que** la première unité de fixation (24) comprend au moins une section de couplage (26) de la plaque latérale (12) qui s'étend dans la première direction d'assemblage (22) et qui est disposée dans un agencement assemblé sur une surface de la paroi d'appui (10) opposée à l'espace libre (14) et/ou **en ce que** la première unité de fixation (24) comprend au moins un premier moyen de fixation (32) actionnable, qui peut être transféré d'une position de fermeture, dans laquelle il forme une liaison par complémentarité de forme ou une liaison par force avec la section de couplage (26), à une position de libération, dans laquelle le premier moyen de fixation (32) est dégagé et/ou est disposé sans contact avec la section de couplage (26).

4. Dispositif porte-pièce (2) selon la revendication 3, **caractérisé en ce que** la section de couplage (26) est formée par une section de bord en forme de L de la plaque latérale (12) ou **en ce que** la section de couplage (26) est formée par un moyen de couplage en forme de L (28) qui peut être fixé de manière amovible ou inamovible à la plaque latérale (12).

5. Dispositif porte-pièce (2) selon la revendication 3 ou 4, **caractérisé en ce que** la première unité de fixation (24) comprend au moins un évidement (30) s'étendant transversalement à la première direction d'assemblage (22), en particulier au moins deux évidements (30) espacés l'un de l'autre dans la première direction d'assemblage (22), dans la section de couplage (26), et/ou **en ce que** la première unité de fixation (24) comprend au moins un premier élément de verrouillage (34) qui peut être disposé dans un du au moins un évidement (30).

6. Dispositif porte-pièce (2) selon l'une des revendications 3 à 5, **caractérisé en ce que** la première unité de fixation (24) comprend un premier moyen de serrage (36) par lequel le premier moyen de fixation (32), notamment le premier élément de verrouillage (34), peut être serré dans la position de fermeture.

7. Dispositif porte-pièce (2) selon l'une des revendications 2 à 6, **caractérisé par** au moins un moyen de guidage (38) en forme de boulon, qui est disposé dans la plaque latérale (12) avec une section de guidage (40) dans un évidement (42) continu s'étendant dans la première direction d'assemblage (22) et qui est fixé avec une extrémité libre de la section de guidage (40) directement ou indirectement sur la paroi d'appui (10) et/ou qui présente une section de tête (44), qui présente, transversalement à la première direction d'assemblage (22), un diamètre supérieur à celui de l'évidement (42), l'étendue de la section de guidage (40) le long de la première direction d'assemblage (22) étant supérieure à l'épaisseur de la plaque latérale (12).

8. Dispositif porte-pièce (2) selon l'une des revendications 2 à 7, **caractérisé par** au moins un moyen élastique (46) qui est disposé entre la plaque latérale (12) et la paroi d'appui (10) et par lequel la plaque latérale (12) peut être soumise à une force du ressort agissant dans le sens opposé à la première direction d'assemblage (22).

9. Dispositif porte-pièce (2) selon l'une des revendications précédentes, **caractérisé par** au moins un premier mandrin de guidage (48) qui est disposé sur une plaque latérale (12) et qui maintient sans contact le composant par rapport à la plaque latérale (12) et qui présente une arête de guidage (50) qui s'étend parallèlement à la direction d'empilage (6) et qui s'étend en totalité ou au moins en partie à travers l'espace libre (14) et qui peut être disposée de manière adjacente au composant dans une rainure correspondante, en particulier de forme complémentaire, ménagée dans le composant, et/ou par au moins un deuxième mandrin de guidage (54), qui est disposé sur une paroi de soutien (10) et qui maintient sans contact le composant par rapport à la paroi d'appui (10) et qui présente une arête de guidage (56) qui s'étend parallèlement à la direction d'empilage (6) et qui s'étend en totalité ou au moins en partie à travers l'espace libre (14) et qui peut être disposée de manière adjacente au composant dans une rainure correspondante, en particulier de forme complémentaire, ménagée dans le composant.

10. Dispositif porte-pièce (2) selon la revendication 9, **caractérisé par** une deuxième unité de fixation (60), par laquelle le au moins un deuxième mandrin de guidage (54) fixé sur la paroi d'appui (10) peut être fixé de manière amovible sans outil le long d'une deuxième direction d'assemblage (62) s'étendant transversalement à la direction d'empilage (6) et transversalement à la première direction d'assemblage (22).

11. Dispositif porte-pièce (2) selon la revendication 10, **caractérisé en ce que** la deuxième unité de fixation (60) comprend au moins un élément de couplage (64) sur lequel est disposé le deuxième mandrin de guidage (54) et qui est disposé de manière mobile à travers une ouverture dans la paroi d'appui (10) et peut être déplacé le long de la deuxième direction d'assemblage (62) et qui est accessible dans une disposition fixe sur une surface de la paroi d'appui (10) opposée à l'espace libre (14) et/ou **en ce que** la deuxième unité de fixation (60) comprend au moins un deuxième moyen de fixation (66) actionnable, qui peut être transféré d'une position de fermeture, dans laquelle il forme une liaison par complémentarité de forme ou une liaison par force avec l'élément de couplage (64), à une position de libération, dans laquelle le deuxième moyen de fixation (66) est dégagé et/ou disposé sans contact avec l'élément de couplage (64).

12. Dispositif porte-pièce (2) selon la revendication 11, **caractérisé en ce que** la deuxième unité de fixation (60) comprend dans l'élément de couplage (64) au moins un évidement (68) s'étendant transversalement à la direction d'assemblage (62), en particulier au moins deux évidements (68) espacés l'un de l'autre le long de la deuxième direction d'assemblage (62), **en ce que** la deuxième unité de fixation (60) comprend au moins un deuxième élément de verrouillage (70) qui peut être disposé dans au moins un évidement (68) et/ou **en ce que** la deuxième unité de fixation (60) comprend au moins un deuxième moyen de serrage par lequel le deuxième moyen de fixation (66), en particulier le deuxième élément de verrouillage (70), peut être serré dans la position de fermeture.

13. Dispositif porte-pièce (2) selon l'une des revendications précédentes, **caractérisé par** quatre premiers mandrins de guidage (48), dont respectivement deux premiers mandrins de guidage (54) sont fixés sur une plaque latérale (12) et/ou par deux deuxièmes mandrins de guidage (54), dont respectivement un deuxième mandrin de guidage (54) est fixé sur une paroi d'appui (10).

14. Dispositif porte-pièce (2) selon l'une des revendications précédentes, **caractérisé en ce qu'**au moins un du au moins un composant ou plusieurs composants comprennent un empilement pour un composant électronique, tel qu'une pile à combustible, une batterie ou un électrolyseur, en particulier une unité d'électrode à membrane (MEA pour Membran-Elektrodeneinheit), une plaque bipolaire (BBP pour Bipolarplatte) et/ou un composant d'électrolyseur pour former une pile à combustible, une batterie ou un électrolyseur.
